# EUROPEAN PATENT APPLICATION

(11) **EP 4 696 292 A2**
(43) Date of publication of application: **18.02.2026**
(21) Application number: 25181554.4
(22) Date of filing: 09.06.2025
(51) Int. Cl.: A61H 1/00, A61H 23/02, A63B 21/00

(54) **MULTIFUNCTIONAL RHYTHM PLATFORM OFFERING COMBINED HORIZONTAL AND VERTICAL MOTIONS**

(30) Priority: 23.07.2024 CN 202410987216
(71) Applicant: Maizu Intelligent Technology (Shanghai) Co., Ltd., Shanghai City, 200082 (CN)
(72) Inventor: Wang, Shih-jung, Shanghai City, 200082 (CN)
(74) Representative: Chung, Hoi Kan

(57) **Abstract**

The present invention relates to the technical field of multifunctional rhythm platform, and discloses a multifunctional rhythm platform combining horizontal and vertical motions, comprising a base and a rhythm platform, wherein the rhythm platform is arranged above the base, two mutually symmetrical first mounting plates are arranged between the base and the rhythm platform, two mutually symmetrical second mounting plates are arranged on opposite side walls of the two first mounting plates, the two first mounting plates and the two second mounting plates are mutually symmetrical, and fixed buckles are equally spaced between the two sets of the first mounting plates and the second mounting plates, and inner cavities of the fixed buckles are provided with fixed bolts, and a transmission mechanism is arranged on the base, and the transmission mechanism is used to drive the rhythm platform to move up, down, left and right. In the present invention, when the first motor and the second motor are started at a same time, the rhythm platform 2 will be able to move in a wave-like manner during operation, so that horizontal and vertical combined rhythm can be achieved, which is more practical and suitable for wide promotion and use.

## Description

### Technical Field

The present invention belongs to the technical field of multifunctional rhythm platform, and specifically relates to a multifunctional rhythm platform offering combined horizontal and vertical motions.

### Background Technology

In order to facilitate modern people to exercise and exercise in indoor spaces, there are currently a variety of fitness devices that can be placed indoors on the market. At present, there are existing rhythm machines on the market that help modern people to exercise. The existing rhythm machine includes a rhythm support seat, a rhythm platform and an eccentric vibration motor, wherein the rhythm platform is covered by the rhythm support seat, and the eccentric vibration motor is connected between the rhythm support seat and the rhythm platform, and the eccentric vibration motor can drive the rhythm platform to swing relative to the rhythm support seat. When the existing rhythm machines are used in a specific application, the users stand on the rhythm platforms, and then the users control the vibrations of the eccentric vibration motors through controllers, so that the eccentric vibration motors drive the users' bodies to vibrate through the rhythm platforms, thereby allowing the users to achieve the effect of fitness exercise.

However, the existing vertical parallel rhythm platforms are often single-function when in use, and can only achieve linear motion in a limited number of directions, which makes them relatively simple. Often, when using them, users may move in multiple directions, and the existing single-direction motion may not be able to meet the needs of users.

In view of this, the present invention is proposed.

### Summary of the Invention

In order to solve the above technical problems, the basic idea of technical schemes adopted by the invention is:
A multifunctional rhythm platform offering combined horizontal and vertical motions, comprises a base and a rhythm platform, wherein the rhythm platform is arranged above the base, two mutually symmetrical first mounting plates are arranged between the base and the rhythm platform, two mutually symmetrical second mounting plates are arranged on opposite side walls of the two first mounting plates, the two first mounting plates and the two second mounting plates are mutually symmetrical, fixed buckles are equally spaced between the two sets of the first mounting plates and the second mounting plates, fixed bolts are arranged in inner cavities of the fixed buckles, a transmission mechanism is arranged on the base, the transmission mechanism is used to drive the rhythm platform to move up, down, left and right, and a first motor and a second motor are also arranged on the base, a belt is arranged at an output end portion of the first motor, and rotating shafts are connected to another side of the belt. Staff starts the first motor, and the first motor can drive the rotating shafts to rotate through the belt, when the rotating shafts 13 rotate, rotating bosses are driven to rotate. When the rotating bosses are running, the rotating bosses as a whole can make first rotating wheels and fourth rotating wheels rotate under the drive of a transmission belt. When the fourth rotating wheels rotate, the fourth rotating wheels can rotate through protrusions set in sliders driven by connecting rods, so as to reciprocate; through triangular cams, the rhythm platform can reciprocate with the assistance of the first mounting plates, the horizontal moving platform and the fixed buckles 4. When the second motor is started, a rotating rod can be driven to rotate, and the rotating wheel bosses can be driven to rotate through the belt. The transmission belt arranged on the rotating wheel bosses can drive the eccentric wheel assembly to rotate. When the eccentric wheel assembly rotates, the sliding plates are driven to move, so that the rhythm platform can perform horizontal motions; when the first motor and the second motor are started at a same time, the rhythm platform can move in a wave-like manner during operation, so that a combination of horizontal and vertical rhythmic motions can be achieved.

As a preferable embodiment of the present invention, protective plates are slidably provided on opposite side walls of the two second mounting plates, the two protective plates are mutually symmetrical, and slide rails are provided on side walls of the two second mounting plates close to the protective plates, the slide rails are mutually symmetrical, and the slide rails comprise slide grooves, ball bearings and protrusions. When the rotating bosses are running, the rotating bosses as a whole can make the first rotating wheels and the fourth rotating wheels rotate under the drive of the transmission belt. When the fourth rotating wheels rotate, the fourth rotating wheels can be driven by the connecting rod to rotate through protrusions set in sliders.

As a preferable embodiment of the present invention, on the slide rails are slidably arranged rotating bosses, the rotating bosses are mutually symmetrical, between the rotating bosses are provided with triangular cams, rotating shafts are fixedly connected to the triangular cams, in middle portions of the rotating bosses are respectively arranged third rotating wheels and fourth rotating wheels, the third rotating wheels and the fourth rotating wheels are connected via conveyor belts, connecting rods are fixedly passed through middle portions of the third rotating wheels, and another end portions of the connecting rods are connected to ball bearings disposed on the slide rails. When the rotating bosses are running, the rotating bosses as a whole can make the first rotating wheels and the fourth rotating wheels rotate under the drive of the transmission belt. When the fourth rotating wheels rotate, the fourth rotating wheels can be driven by the connecting rod to rotate through protrusions set in sliders.

As a preferable embodiment of the present invention, horizontal movable platforms are provided on side walls of the protective plates opposite to the second mounting plate, both end portions of the horizontal moving platforms are respectively provided with third rotating wheels and fixed wheels, and the fixed wheels are fixedly connected to the first mounting plates and the second mounting plates. When the rotating bosses 8 are running, the rotating bosses 8 as a whole can make the first rotating wheels 20 and the fourth rotating wheels 21 rotate under the drive of the transmission belt. When the fourth rotating wheels 21 rotate, the fourth rotating wheels 21 can be driven by the connecting rod to rotate through protrusions set in sliders.

As a preferable embodiment of the present invention, output end portions of the second motor is connected to a rotating rod, and a belt is provided on the rotating rod, and the belt is connected to rotating wheel bosses in a transmission manner, and a transmission belt is provided on the rotating wheel bosses, and another side of the transmission belt is connected to an eccentric wheel assembly. When the second motor is started, the rotating rod can be driven to rotate, and the rotating wheel bosses can be driven to rotate through the belt, and the eccentric wheel assembly 10 can be driven to rotate through the transmission belt provided on the rotating wheel bosses.

As a preferable embodiment of the present invention, two mutually symmetrical sliding plates are arranged above the eccentric wheel assembly, and the two sliding plates are slidably connected to bottom portions of the rhythm platform. When the eccentric wheel assembly 10 rotates, the sliding plate 26 can be driven to move, so that the rhythm platform 2 can perform horizontal and vertical movements.

As a preferable embodiment of the present invention, threaded holes are provided in middle portions of the rotating wheel bosses, and threaded rods are meshedly mounted on the threaded holes; circular notches are provided at another end portions of the threaded rods, and plug-in rods are plugged into inner cavities of the circular notches; and another end portions of the plug-in rods are fixedly connected to the third rotating wheels.

Compared with the prior art, the present invention has following beneficial effects:
In the present invention, the operator starts the first motor, and the first motor can drive the rotating shafts to rotate through the belt, when the rotating shafts rotate, the rotating bosses are driven to rotate. When the rotating bosses are running, the rotating bosses as a whole can make first rotating wheels and fourth rotating wheels rotate under the drive of a transmission belt. When the fourth rotating wheels rotate, the fourth rotating wheels can rotate through protrusions set in sliders driven by connecting rods, so as to reciprocate; through triangular cams, the rhythm platform can reciprocate with the assistance of the first mounting plates, the horizontal moving platform and the fixed buckles. When the second motor is started, a rotating rod can be driven to rotate, and the rotating wheel bosses can be driven to rotate through the belt. The transmission belt arranged on the rotating wheel bosses can drive the eccentric wheel assembly to rotate. When the eccentric wheel assembly rotates, the sliding plates are driven to move, so that the rhythm platform can perform horizontal and vertical motions; when the first motor and the second motor are started at a same time, the rhythm platform can move in a wave-like manner during operation, so that a combination of horizontal and vertical rhythmic motions can be achieved.

The specific embodiments of the preset invention are further described in detail in conjunction with the accompanying drawings.

### Brief Description of the Drawings

In the accompanying drawings:
Figure 1 is a schematic diagram of a three-dimensional structure of the present invention.
Figure 2 is a structural schematic diagram of a rhythm platform of the present invention.
Figure 3 is a first structural schematic diagram showing opposite sides of the rhythm platform and a base in the present invention.
Figure 4 is a second structural schematic diagram showing opposite sides of the rhythm platform and the base in the present invention.
Figure 5 is a third structural schematic diagram showing opposite sides of the rhythm platform and a base in the present invention.
Figure 6 is a fourth structural schematic diagram showing opposite sides of the rhythm platform and a base in the present invention.
Figure 7 is a fifth structural schematic diagram showing opposite sides of the rhythm platform and a base in the present invention.
Figure 8 is a sixth structural schematic diagram showing opposite sides of the rhythm platform and a base in the present invention.

The markups in the drawings are indicated as follows:
1-base;
2-rhythm platform;
3-first mounting plate;
4-fixed buckle;
5-fixed bolt;
6-second mounting plate;
7-protective plate;
8- rotating boss;
9-horizontal moving platform;
10-eccentric wheel assembly;
12-threaded rod;
13-rotating shaft;
14-transmission belt;
15-slide rail;
18-third rotating wheel;
19-fixed wheel;
20-first rotating wheel;
21-fourth rotating wheel;
22- rotating wheel boss;
23-first motor;
24-second motor;
25-triangular cam; and
26-sliding plate.

### Specific Embodiments

In order to make the purpose, technical solutions and advantages of the embodiments of the present invention clearer, the technical solutions in the embodiments will be clearly and completely described below in conjunction with the drawings in the embodiments of the present invention. The following embodiments are used to illustrate the present invention.

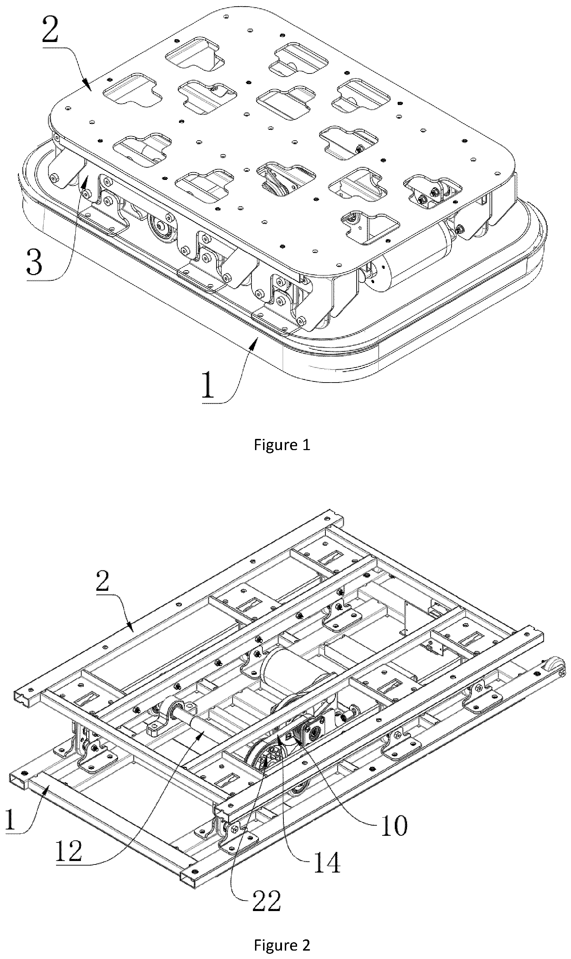

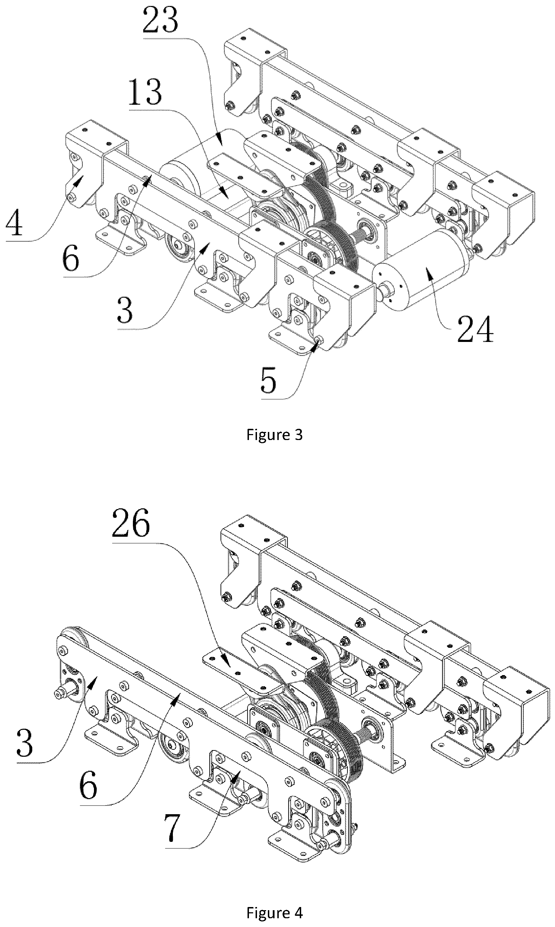

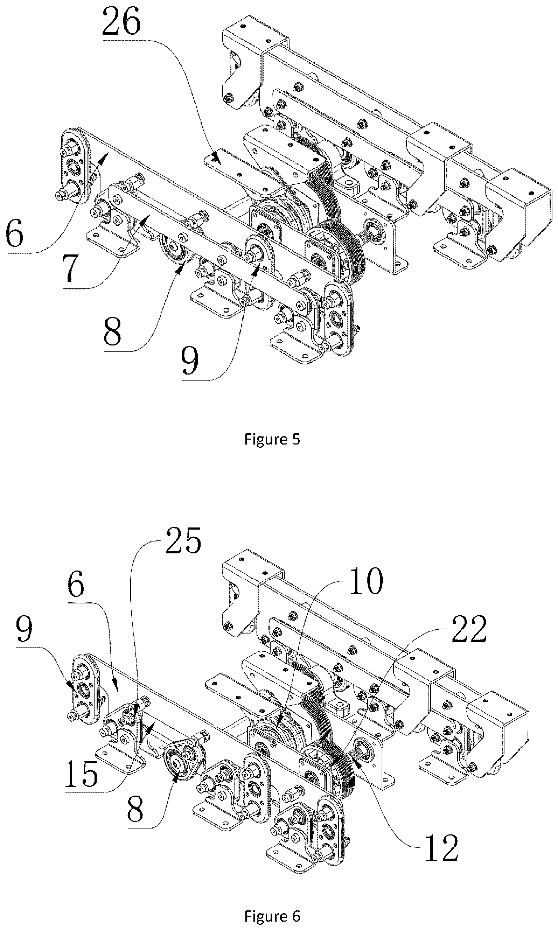

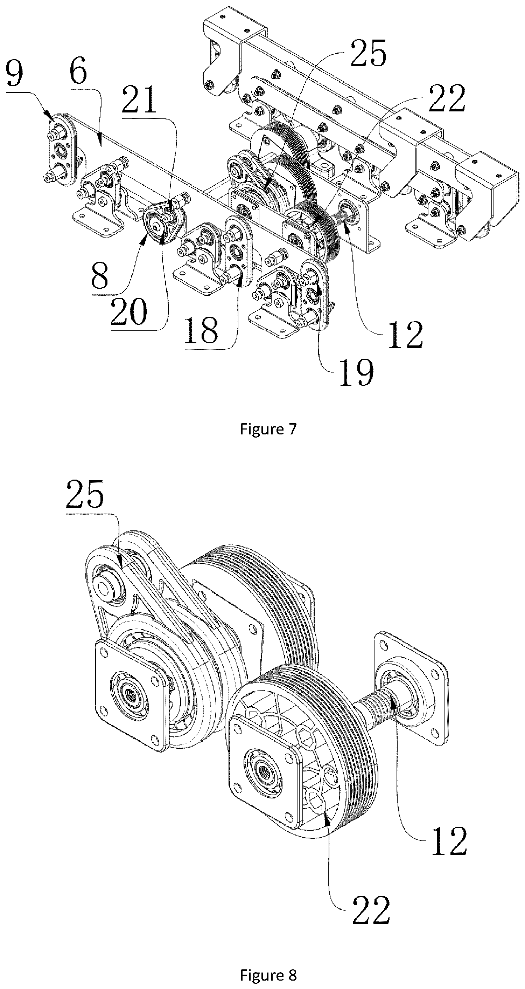

As shown in figures 1-8, a multifunctional rhythm platform offering combined horizontal and vertical motions, comprises a base 1 and a rhythm platform 2, wherein the rhythm platform 2 is arranged above the base 1, two mutually symmetrical first mounting plates 3 are arranged between the base 1 and the rhythm platform 2, two mutually symmetrical second mounting plates 6 are arranged on opposite side walls of the two first mounting plates 3, the two first mounting plates 3 and the two second mounting plates 6 are mutually symmetrical, fixed buckles 4 are equally spaced between the two sets of the first mounting plates 3 and the second mounting plates 6, fixed bolts 4 are arranged in inner cavities of the fixed buckles 5, a transmission mechanism is arranged on the base 1, the transmission mechanism is used to drive the rhythm platform 2 to move up, down, left and right, and a first motor 23 and a second motor 24 are also arranged on the base 1, a belt is arranged at an output end portion of the first motor 23, and rotating shafts 13 are connected to another side of the belt. When the rotating shafts 13 rotate, the rotating bosses 8 are driven to rotate. When the rotating bosses 8 are running, the rotating bosses 8 as a whole can make first rotating wheels 20 and fourth rotating wheels 21 rotate under the drive of a transmission belt. When the fourth rotating wheels 21 rotate, the fourth rotating wheels 21 can rotate through protrusions set in sliders driven by connecting rods, so as to reciprocate; through triangular cams 25, the rhythm platform 2 can reciprocate with the assistance of the first mounting plates 3, the horizontal moving platform and the fixed buckles 4. When the second motor 24 is started, the rotating rod can be driven to rotate, and the rotating wheel bosses 22 can be driven to rotate through the belt. The transmission belt 14 arranged on the rotating wheel bosses 22 can drive the eccentric wheel assembly 10 to rotate. When the eccentric wheel assembly 10 rotates, the sliding plates 26 are driven to move, so that the rhythm platform 2 can perform horizontal and vertical motions; when the first motor 23 and the second motor 24 are started at a same time, the rhythm platform 2 can move in a wave-like manner during operation, so that a combination of horizontal and vertical rhythmic motions can be achieved.

In a specific embodiment of the present invention, protective plates 7 are slidably provided on opposite side walls of the two second mounting plates 6, the two protective plates 7 are mutually symmetrical, and slide rails 15 are provided on side walls of the two second mounting plates 6 close to the protective plates 7, the slide rails 15 are mutually symmetrical, and the slide rails 15 comprise slide grooves, ball bearings and protrusions. In the present embodiment, when the rotating bosses 8 are running, the rotating bosses 8 as a whole can make the first rotating wheels 20 and the fourth rotating wheels 21 rotate under the drive of the transmission belt. When the fourth rotating wheels 21 rotate, the fourth rotating wheels 21 can be driven by the connecting rod to rotate through protrusions set in sliders.

Further, on the slide rails 15 are slidably arranged rotating bosses 8, the rotating bosses 8 are mutually symmetrical, between the rotating bosses 8 are provided with triangular cams 25, rotating shafts are fixedly connected to the triangular cams 25, in middle portions of the rotating bosses 8 are respectively arranged first rotating wheels 20 and fourth rotating wheels 21, the first rotating wheels 20 and the fourth rotating wheels 21 are connected via conveyor belts, connecting rods are fixedly passed through middle portions of the first rotating wheels 20, and another end portions of the connecting rods are connected to ball bearings disposed on the slide rails 15. In the present embodiment, when the rotating bosses 8 are running, the rotating bosses 8 as a whole can make the first rotating wheels 20 and the fourth rotating wheels 21 rotate under the drive of the transmission belt. When the fourth rotating wheels 21 rotate, the fourth rotating wheels 21 can be driven by the connecting rod to rotate through protrusions set in sliders.

Further, horizontal movable platforms 9 are provided on side walls of the protective plates 7 opposite to the second mounting plate 6, both end portions of the horizontal moving platforms 9 are respectively provided with third rotating wheels 18 and fixed wheels 19, and the fixed wheels 19 are fixedly connected to the first mounting plates 3 and the second mounting plates 6. In the present embodiment, when the rotating bosses 8 are running, the rotating bosses 8 as a whole can make the first rotating wheels 20 and the fourth rotating wheels 21 rotate under the drive of the transmission belt. When the fourth rotating wheels 21 rotate, the fourth rotating wheels 21 can be driven by the connecting rod to rotate through protrusions set in sliders.

As a preferable embodiment of the present invention, output end portions of the second motor 24 is connected to a rotating rod, and a belt is provided on the rotating rod, and the belt is connected to rotating wheel bosses 22 in a transmission manner, and a transmission belt 14 is provided on the rotating wheel bosses 22, and another side of the transmission belt 14 is connected to an eccentric wheel assembly 10. In the present embodiment, when the second motor 24 is started, the rotating rod can be driven to rotate, and the rotating wheel bosses 22 can be driven to rotate through the belt, and the eccentric wheel assembly 10 can be driven to rotate through the transmission belt 14 provided on the rotating wheel bosses 22.

Further, two mutually symmetrical sliding plates 26 are arranged above the eccentric wheel assembly 10, and the two sliding plates 26 are slidably connected to bottom portions of the rhythm platform 2. In the present embodiment, when the eccentric wheel assembly 10 rotates, the sliding plate 26 can be driven to move, so that the rhythm platform 2 can perform horizontal and vertical movements.

As a preferable embodiment of the present invention, threaded holes are provided in middle portions of the rotating wheel bosses 22, and threaded rods 12 are meshedly mounted on the threaded holes; circular notches are provided at another end portions of the threaded rods, and plug-in rods are plugged into inner cavities of the circular notches; and another end portions of the plug-in rods are fixedly connected to the third rotating wheels 18.

The implementation principle of a multifunctional rhythm platform offering combined horizontal and vertical motions of embodiments in the present embodiment is as follows: first the staff starts the first motor 23, and the first motor 23 can drive the rotating shafts 13 to rotate through the belt, when the rotating shafts 13 rotate, the rotating bosses 8 are driven to rotate. When the rotating bosses 8 are running, the rotating bosses 8 as a whole can make first rotating wheels 20 and fourth rotating wheels 21 rotate under the drive of a transmission belt. When the fourth rotating wheels 21 rotate, the fourth rotating wheels 21 can rotate through protrusions set in sliders driven by connecting rods, so as to reciprocate; through triangular cams 25, the rhythm platform 2 can reciprocate with the assistance of the first mounting plates 3, the horizontal moving platform and the fixed buckles 4. When the second motor 24 is started, the rotating rod can be driven to rotate, and the rotating wheel bosses 22 can be driven to rotate through the belt. The transmission belt 14 arranged on the rotating wheel bosses 22 can drive the eccentric wheel assembly 10 to rotate. When the eccentric wheel assembly 10 rotates, the sliding plates 26 are driven to move, so that the rhythm platform 2 can perform horizontal and vertical motions; when the first motor 23 and the second motor 24 are started at a same time, the rhythm platform 2 can move in a wave-like manner during operation, so that a combination of horizontal and vertical rhythmic motions can be achieved.

## Claims

1. A multifunctional rhythm platform offering combined horizontal and vertical motions, comprising a base (1) and a rhythm platform (2), wherein the rhythm platform (2) is arranged above the base (1), two mutually symmetrical first mounting plates (3) are arranged between the base (1) and the rhythm platform (2), two mutually symmetrical second mounting plates (6) are arranged on opposite side walls of the two first mounting plates (3), the two first mounting plates (3) and the two second mounting plates (6) are mutually symmetrical, fixed buckles (4) are equally spaced between the two sets of the first mounting plates (3) and the second mounting plates (6), fixed bolts (5) are arranged in inner cavities of the fixed buckles (4), a transmission mechanism is arranged on the base (1), the transmission mechanism is used to drive the rhythm platform (2) to move up, down, left and right, a first motor (23) and a second motor (24) are also arranged on the base (1), a belt is arranged at an output end portion of the first motor (23), and rotating shafts (13) are connected to another side of the belt.

2. The multifunctional rhythm platform offering combined horizontal and vertical motions according to claim 1, wherein protective plates (7) are slidably provided on opposite side walls of the two second mounting plates (6), the two protective plates (7) are mutually symmetrical, and slide rails (15) are provided on side walls of the two second mounting plates (6) close to the protective plates (7), the slide rails (15) are mutually symmetrical, and the slide rails (15) comprise slide grooves, ball bearings and protrusions.

3. The multifunctional rhythm platform offering combined horizontal and vertical motions according to claim 2, wherein on the slide rails (15) are slidably arranged rotating bosses (8), the rotating bosses (8) are mutually symmetrical, between the rotating bosses (8) are provided with triangular cams (25), rotating shafts (13) are fixedly connected to the triangular cams (25), in middle portions of the rotating bosses (8) are respectively arranged first rotating wheels (20) and fourth rotating wheels (21), the first rotating wheels (20) and the fourth rotating wheels (21) are connected via conveyor belts, connecting rods are fixedly passed through middle portions of the first rotating wheels (20), and another end portions of the connecting rods are connected to ball bearings disposed on the slide rails (15).

4. The multifunctional rhythm platform offering combined horizontal and vertical motions according to claim 2, wherein horizontal movable platforms (9) are provided on side walls of the protective plates (7) opposite to the second mounting plate (6), both end portions of the horizontal moving platforms (9) are respectively provided with third rotating wheels (18) and fixed wheels (19), and the fixed wheels (19) are fixedly connected to the first mounting plate (3) and the second mounting plate (6).

5. The multifunctional rhythm platform offering combined horizontal and vertical motions according to claim 1, wherein output end portions of the second motor (24) is connected to a rotating rod, and a belt is provided on the rotating rod, and the belt is connected to rotating wheel bosses (22) in a transmission manner, and a transmission belt (14) is provided on the rotating wheel bosses (22), and another side of the transmission belt (14) is connected to an eccentric wheel assembly (10).

6. The multifunctional rhythm platform offering combined horizontal and vertical motions according to claim 5, wherein two mutually symmetrical sliding plates (26) are arranged above the eccentric wheel assembly (10) and the two sliding plates (26) are slidably connected to bottom portions of the rhythm platform (2).

7. The multifunctional rhythm platform offering combined horizontal and vertical motions according to claim 1, wherein threaded holes are provided in middle portions of the rotating wheel bosses (22), and threaded rods (12) are meshedly mounted on the threaded holes; circular notches are provided at another end portions of the threaded rods (12), and plug-in rods are plugged into inner cavities of the circular notches; and another end portions of the plug-in rods are fixedly connected to the third rotating wheels (18).
